# EUROPEAN PATENT APPLICATION

(11) **EP 4 818 113 A1**
(43) Date of publication of application: **07.10.2026**
(21) Application number: 25300035.0
(22) Date of filing: 31.03.2025
(51) Int. Cl.: C01B 6/21

(54) **METHOD OF REGENERATION OF METAL BORATE TO METAL BOROHYDRIDE USING GASEOUS HYDROGEN AND MECHANICAL PROCESSING**

(71) Applicant: H2Flexx B.V., 4879 NJ Etten-Leur (NL)
(72) Inventor: CASTEL, Sander, 4879 NJ ETTEN-LEUR (NL); KONING, Elwin Derk, 4879 NJ ETTEN-LEUR (NL); HENDERIKS, Jurn, 4879 NJ ETTEN-LEUR (NL); SARRA, Paschalina-Danai, 4879 NJ ETTEN-LEUR (NL); SLOTBOOM, Yordi, 4879 NJ ETTEN-LEUR (NL)
(74) Representative: Algemeen Octrooi- en Merkenbureau B.V.

(57) **Abstract**

The present invention relates to a method of regenerating a metal borate to the corresponding metal borohydride by mechanical processing of said metal borate with the addition of gaseous hydrogen. In addition, the present invention relates to a metal borohydride obtained, preferably directly obtained, by the method according to the invention.

## Description

### FIELD OF THE INVENTION

The present invention relates to a method of regeneration of metal borate to metal borohydride using gaseous hydrogen and mechanical processing.

### Background

The background description includes information that may be useful in understanding the present invention. It is not an admission that any of the information provided herein is prior art or relevant to the presently claimed invention, or that any publication specifically or implicitly referenced is prior art.

As the world's dependence on fossil fuels decreases and attention is paid to renewable energy, hydrogen energy, as a clean and efficient form of energy, has gradually gained attention. Hydrogen energy is considered to be one of the important ways to achieve the goal of carbon neutrality and can be used in transportation, industrial production, energy storage and other fields. Especially in land and in marine transportation, the application of hydrogen energy helps to reduce carbon emissions and - for the latter - protect the marine ecological environment. Therefore, a hydrogen delivery system for hydrogen powered vehicles, in particular marine or land vehicles, is needed.

Hydrogen (H₂) is considered to be one of the most promising sources of green energy for the future. Hydrogen has a high energy density and is currently seen as one of the cleanest fuels since the only side product after use is water. A disadvantage however of hydrogen is that it is gaseous in form and very reactive and therefore, there are significant costs and safety issues involved in the liquification/compression, storage and transportation that currently prevent a more widespread use thereof as a fuel.

There has been several means of storing hydrogen using metal borohydrides, M(BH₄)ₙ that are in solid form from which hydrogen can be easily released using water via hydrolysis. Upon hydrolysis, hydrogen is formed as well as metal borates as side products as a spent fuel.

In the early 2000s, sodium borohydride (NaBH₄) emerged as a promising hydrogen storage material for fuel cell systems. Sodium borohydride (NaBH₄) is regarded as an excellent hydrogen-generating material, but its irreversibility of hydrolysis and high cost of regeneration restrict its large-scale application.

The Brown-Schlesinger process is an industrial method to produce sodium borohydride (NaBH₄) which involves the reaction of borax with sodium hydride under high temperature conditions. However, there is a need for a more cyclic process in which consumed fuel (which is then in the form of sodium borate) is regenerated into sodium borohydride.

A known method of sodium borohydride regeneration is annealing dehydrated sodium metaborate (NaBO₂) with magnesium hydride (MgH₂) as reducing agent at high temperature and high hydrogen pressure, yielding magnesium oxide (MgO) as byproduct. For example, KwangSup Eom et al.; International Journal of Hydrogen Energy, vol. 38, 2013, pages 2804-2809, "Thermochemical production of sodium borohydride from sodium metaborate in a scaled-up reactor*"* discloses temperatures of 400 - 600 °C and hydrogen pressures of 30-60 bar.

The present invention provides a new method for the regeneration of metal borates to metal borohydrides.

As a starting material of the present method can be spent fuel that is formed upon reaction of the solid fuel M(BH₄)ₙ and water, generating hydrogen. The material obtained after the hydrogen has been removed, can be regenerated using the present method.

### Objects

It is an object of the present invention to provide an improved regeneration method for metal borate to metal borohydride.

It is an additional object of the present invention to provide an improved regeneration method for metal borate to metal borohydride

It is a further object of the present invention to provide a method via which a metal, preferably sodium, metaborate can be regenerated into a metal, preferably sodium, borohydride, without large energy consumptions or significant amounts of side products.

### STATEMENT OF THE INVENTION

In a first aspect, the invention relates to a method of regenerating a metal borate to the corresponding metal borohydride by mechanical processing of said metal borate with the addition of gaseous hydrogen.

In a second aspect, the present invention relates to a metal borohydride (directly) obtained via the method according to the first or second aspect.

Corresponding embodiments for one method are also applicable for the other method according to the present invention.

### DETAILED DESCRIPTION

The present invention is elucidated below with a detailed description.

### List of definitions

The following definitions are used in the present description and claims to define the stated subject matter. Other terms not cited below are meant to have the generally accepted meaning in the field.

"Borate" as used in the present description means: an anion containing one or more boron atoms and 2 or more oxygen atoms, in the form of BₙOₘ^{y-} , wherein n is the number of boron atoms, m is the number of oxygen atoms and y is the number of negative charges of the anion. Another word for borate is boron oxide. Examples of borates are orthoborate (BO₃⁻) in which n=y=1 and m=3, metaborate (BO₂⁻ ) in which n=y=1 and m=2 which can be in monomeric, oligomeric (e.g. trimer) or polymeric form, tetraborate (B₄O₇²⁻) in which n=4, y=2 and m=7.
"Borate hydrate" as used in the present description means: a hydrate form of a borate, being BₙOₘ^{y-}·zH₂O wherein z is the number of water molecules complex to the borate, such as 2 for a dihydrate or 4 for a tetrahydrate. Examples are tetraborate dihydrate (B₄O₇²⁻)·2H₂O which can also be written as [B₄O₅(OH)₄]²⁻.

"Metal borate" as used in the present description means: anhydrous metal borate or a metal borate hydrate.

"Anhydrous metal borate" as used in the present description means: a salt of a metal cation and one or more borate anions, having the general formula. Examples are M(BO₂)ₙ in which M is a metal, and n is an integer that is associated with the valence of the metal, such as anhydrous sodium borate, such as sodium metaborate (NaBO₂ or Na₃B₃O₆) or potassium borate (K₂B₄O₇).

"Metal borate hydrate" as used in the present description means: a salt of a metal cation and one or more borate hydrate anions. Examples thereof are sodium metaborate dihydrate NaBO₂·2H₂O, which can also be represented as NaB(OH)₄, or sodium metaborate tetrahydrate (NaBO₂·4H₂O), which can also be represented as NaB(OH)₄·2H₂O

"Sodium borate" as used in the present description means: either anhydrous sodium borate (NaBO₂ or Na₃B3O₆), sodium metaborate one third hydrate (NaBO₂·⅓H₂O), sodium metaborate two third hydrate ( ${NaBO}_{2} ⋅ \frac{2}{3} {H}_{2} O$), sodium metaborate one and a halve hydrate ( ${NaBO}_{2} ⋅ \frac{3}{2} {H}_{2} O$), sodium metaborate four third hydrate ( ${NaBO}_{2} ⋅ \frac{4}{3} {H}_{2} O$), sodium metaborate dihydrate NaBO₂·2H₂O, or sodium metaborate tetrahydrate (NaBO₂·4H₂O). NaBO₂ generally exists in three different forms, namely anhydrous, dihydrate or tetrahydrate. The latter form, the tetrahydrate is the most common, because when formed at a temperature of below 65°C NaBO₂ generally crystallizes with four water molecules inside its crystal structure. The dihydrate form can generally be obtained, as is done in many prior art regeneration methods, by drying the tetrahydrate form at an increased temperature for a certain duration, for example at a temperature of about 80°C in 30 minutes. The anhydrous form can be obtained by drying the dihydrate form at an increased temperature for a certain duration, for example for a time period of over 5 hours at a temperature of around 350°C.

"Metal borohydride" as used in the present description means: a compound according to the formula M(BH₄)ₙ wherein M is a metal and wherein n is an integer associated with the valence of the metal M.

"Powder, granules or tablets" as used in the present description means: a material in solid, particulate form. A powder is a plurality of particles, characterized by their small size, typically in the micrometre and nanometre range. Granules are particles characterized by their size, typically in the millimetre range. Tablets are particles characterized by their size, typically in the millimetre and centimetre range.

"metal powder" as used in the present description means: a metal in powder form. This metal powder acts as a reducing agent or as an intermediate of a reducing agent in the present regeneration method. It is a plurality particles primarily composed of a metallic material, characterized by their small size, typically in the micrometre or nanometre range. These particles are manufactured using techniques such as atomization, reduction, electrolysis, or chemical processes, and may have specific physical and chemical properties tailored for use in catalysts.

"reducing agent" as used in the present description means: an agent, for example a metal (M) that is used in the present method to accept one or more oxygen atoms from the metal borate when reducing to metal borohydride.

"drying agent" as used in the present description means: an oxide, such as a metal oxide, which enhances the regeneration method by removing any water.

"stabilization agent" as used in the present description means: an anhydrous metal (M) hydroxide powder that acts as a stabilizer during the regeneration reaction.

"mechanical processing" as used in the present description means: any method, technique, or operation that involves the application of mechanical forces or movements to a material in order to alter its physical properties, structure, shape, or composition. During mechanical processing the material is subjected to mechanical friction and/or impact. This includes, but is not limited to, cutting, grinding, milling - for example ball milling-, drilling, shearing, extruding, compressing, shaking, vibrating, rolling, hammering, and pressurizing, or otherwise modifying a material through direct or indirect mechanical interaction. Mechanical processing may be performed using manual tools, automated machinery, or robotic systems, and can encompass continuous or discontinuous operations applied in material treatment. The term further encompasses processes that integrate mechanical actions with auxiliary forces, such as friction, impact, vibration, or pressure, to achieve a desired modification of said material. It excludes purely chemical, electrical, or thermal treatments - or combinations thereof - unless such treatments are secondary or ancillary to a mechanical operation.

### Method of the invention

The present method relates to regeneration of metal borates to metal borohydrides using gaseous hydrogen. In particular, the present method relates to regeneration of sodium borates to sodium borohydrides using gaseous hydrogen.

For the present method, the starting materials used are: 1) a metal borate, 2) gaseous hydrogen; 3) optionally a reducing agent; 4) optionally a drying agent; and 5) optionally a stabilization agent.

The present invention relates in a first aspect to a method of regenerating a metal borate to the corresponding metal borohydride by mechanical processing of said metal borate with the addition of gaseous hydrogen.

The present invention relates in a specific aspect to a method comprising the steps of:
* transferring a solid metal borate or hydrate thereof into a reactor,
* adding gaseous hydrogen to said reactor,
* optionally adding a reducing agent and/or a drying agent and/or a stabilization agent to said reactor,
* mechanically processing the solid material in said reactor in the presence of said gaseous hydrogen to regenerate said metal borate or hydrate into a metal borohydride.

More details regarding the starting material and process conditions are shown below.

### Starting materials

### Metal borate

The present invention relates to regeneration of a metal borate, preferably sodium or potassium metaborate into a hydrogen-rich metal borohydride, preferably sodium or potassium borohydride. As a starting material preferably sodium or potassium metaborate is used that is formed upon reaction of the solid fuel NaBH₄ or KBH₄ respectively and water, generating hydrogen. The material obtained after the hydrogen has been extracted can be regenerated using the present process.

As starting material for the method according to present invention preferably a spent solid fuel is used, that is obtained by hydrogen extraction from a solid fuel comprising metal borohydride. In an embodiment, a metal borate may be separated from a spent fuel, e.g. by crystallization, and said separated metal borate may be used as the metal borate starting material according to the present invention. More information regarding this spent fuel and separated metal borate is disclosed in the pending Dutch patent application NL4000016 filed March 6, 2025 in the name of the present applicant. The present invention uses as a metal (e.g. Na or K) borohydride as a fuel component. MBH₄ (e.g. NaBH₄ or KBH₄) reacts to metal borate in an extractor to produce hydrogen according to the formulas below:

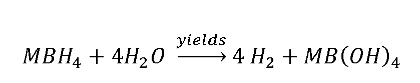

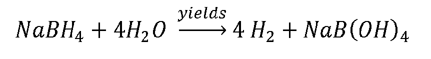

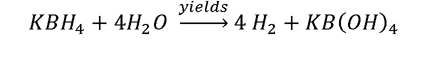

The general reaction equation of regeneration of a metal (e.g. Na or K) metaborate dihydrate is according to the following equation:

*MBO*₂ *+* 4*H*₂ *→* MBH₄ *+* 2*H*₂*O*

NaBO₂ *+* 4*H*₂ *→* NaBH₄ *+* 2*H*₂*O*

*KBO*₂ *+* 4*H*₂ → KBH₄ *+* 2*H*₂*O*

When sodium borate is used as the metal borate of the present invention, the following is observed. NaBO₂ may exists in several different forms, namely anhydrous, 1/3 hydrate, 4/3 hydrate, 3/2 hydrate, dihydrate or tetrahydrate. The latter form, the tetrahydrate is the most common, because when formed at a temperature of below 55°C NaBO₂ generally crystallizes with four water molecules inside its crystal structure. The dihydrate form can generally be obtained, as is done in many prior art regeneration methods, by drying the tetrahydrate form at a temperature of about 60°C to 95°C in 60 minutes. The 3/2 hydrate form can be obtained by drying the dihydrate around an hour at a temperature between 96 and 105°C, the 4/3 hydrate form can be obtained by drying the dihydrate around an hour at a temperature between 105 and 115°C. The 1/3 hydrate form can be obtained by drying the dihydrate around an hour at a temperature between 115 and 275°C. The anhydrous form can be obtained by drying the dihydrate form for a time period of over 5 hours at a temperature of around 275°C. For regenerating the anhydrous, the 1/3 hydrate, 4/3 hydrate and 3/2 hydrate forms of sodium metaborate are preferred.

In an embodiment, the metal borate has the formula MBO₂·xH₂O wherein M denotes the metal ion, preferably Na, and wherein x denotes the number of crystal water molecules.

In an embodiment, x is at most 2, preferably wherein x is < 2, more preferably wherein x is at most 3/2, or wherein x is at most 4/3, or at most 1. A combination of two or more metal borates with different crystal water numbers may also be used.

When the number of crystal water molecules is high, additional drying agents are required to achieve an optimal conversion, which drying agents are costly thereby increasing the overall costs of the regenerated metal borohydride. During the regeneration process water is formed as a by-product and the metal oxide can react with the produced water to keep the process dry. However, when starting with a material with a significant amount of crystal water, additional drying agent (metal oxide) will be preferably present to take up crystal water molecules. In an embodiment, prior to the regeneration, an addition drying step is used to remove at least part of the crystal water. Said drying step may be carried out using drying agent, such as a metal oxide. Upon reaction with water these metal oxides are transformed into the corresponding metal hydroxides.

In an embodiment, the metal borate is sodium metaborate (NaBO₂) or sodium metaborate hydrate (NaBO₂·xH₂O) wherein x < 2, or a combination of two or more thereof or wherein the metal borate is potassium metaborate (KBO₂) or potassium metaborate hydrate (KBO₂·xH₂O) wherein x < 2, or a combination of two or more thereof.

In an embodiment, the method include a step of dehydrating of NaBO₂·4H₂O and/or NaBO₂·2H₂O to such a hydration state that the number of crystal water molecules is at most 1.5.

Sodium borohydride (NaBH₄) has a molecular weight of 37.83 gram/mole and can when exposed to excess of water release four molecules of hydrogen (H₂), having a molecular weight of 2.02 gram/mole, while also producing one molecule of either anhydrous sodium metaborate (NaBO₂), having a molecular weight of 65.80 gram/mole, sodium metaborate dihydrate (NaBO₂·2H₂O), having a molecular weight of 101.84 gram/mole, or sodium metaborate tetrahydrate (NaBO₂·4H₂O), having a molecular weight of 137.88 gram/mole, as side products. Thus, theoretically 1.00 kg of NaBH₄ (26.43 moles) will yield 0.21 kg H₂. In addition, it can yield maximally 1.74 kg of NaBO₂ or 2.69 kg of NaBO₂·2H₂O or 3.64 kg of NaBO₂·4H₂O.

Potassium borohydride (KBH₄) has a molecular weight of 53.94 gram/mole and can when exposed to excess of water release four molecules of hydrogen (H₂), having a molecular weight of 2.02 gram/mole, while also producing one molecule of either anhydrous potassium metaborate (KBO₂), having a molecular weight of 81.91 gram/mole, potassium metaborate 1¼ hydrate (KBO₂·1 ¼ H₂O), having a molecular weight of 104.43 gram/mole, or potassium metaborate 1½ hydrate (KBO₂·1½H₂O), having a molecular weight of 108.93 gram/mole, or potassium metaborate dihydrate (KBO₂·2H₂O), having a molecular weight of 117.94 gram/mole or potassium metaborate tetrahydrate (KBO₂·4H₂O), having a molecular weight of 153.97 gram/mole, as side products. Thus, theoretically 1.00 kg of KBH₄ (18.5 moles) will yield 0.149 kg H₂. In addition, it can yield maximally 1.52 kg of KBO₂ or 1.94 kg of KBO₂·1¼H₂O or 2.02 kg of KBO₂·1½H₂O or 2.19 kg of KBO₂·2H₂O or 2.85 kg of KBO₂·4H₂O.

As a starting material preferably sodium metaborate anhydrous is used, generally the powder is 98% dry or more.

The starting material can be optionally pre-ground to micrometre particle size. Because the particle size of the starting crystals might be in millimetre range.

### Gaseous hydrogen

During the method of the present invention, gaseous hydrogen is used. This gaseous hydrogen reacts with the starting material to form a hydrogen-rich metal borohydride material.

The gaseous hydrogen used in the present invention is preferably used in pressurized form, such as with a pressure of between 0.5 and 100 bar, more preferably between 1 and 10 bar, such as between 3 and 8 bar.

The gaseous hydrogen used in the present invention is preferably used in a ratio to the starting material of 1-8 mole of hydrogen per mole of metal borate.

The gaseous hydrogen is preferably present in the process in an excess of at least 0.5 mole per mole of starting material.

When the reaction is carried out batch wise in a closed container (see below), the amount of hydrogen that is consumed during the regeneration can be calculated using the pressure of hydrogen gas at the start and the pressure of hydrogen gas at the end and determine the difference. Any pressure measuring device, e.g. a manometer, may be used for this determination.

### Optional components

### Drying agent

In an embodiment, a drying agent is added, being an oxide, such as a metal oxide. In an embodiment two or more drying agents are added. In an embodiment, the drying agent is selected from the group consisting magnesium oxide (MgO), copper oxide (CuO), iron(lll) oxide-hydroxide (FeO(OH)), iron(lll) oxide (Fe₂O₃), calcium oxide (CaO), silicon oxide (SiO₂), nickel oxide (NiO) and zinc oxide (ZnO) and a combination of two or more thereof.

Such a drying agent may be present to enhance the regeneration method. The present inventors have inventively observed that when a metal oxide, in particular MgO is present during the regeneration process, the reaction is more optimal by removing the water and thus preventing backwards reaction of any produced borohydride. Without wishing to be bound to a particular theory, the inventors believe that when a metal oxide (MO) is used, the reaction with water leads to a metal hydroxide (M(OH)₂)

This is a surprising fact, since prior art processes relate to the use of magnesium as a metal in this process, leading to the formation of MgO which is considered as a side product that is costly to work up to Mg for another round. The present inventors have not found that MgO is not a negative side product but is actually beneficial to the regeneration method. For example, in Ouyang et al.; Advanced Energy Materials, 2017, "enhancing the regeneration process of consumed NaBH4 for hydrogen storage" Mg is used in a 5 fold excess to lead to NaBH₄ and a 4-fold excess of MgO. During this process the hydrogen atoms that end up in NaBH₄ come from the water in the dihydrate form of sodium metaborate that is used as starting material (NaBO₂·2H₂O). There is no hydrogen added during this process. A disadvantage of this process is that large amounts of MgO are produced which are expensive and energy consuming to return to Mg.

In an embodiment, a drying agent is used in a weight ratio of drying agent to metal borate ( $\frac{weight of drying agent}{weight of metal borate}$) is between 0.1 and 15, preferably between 1 and 5, more preferably between 0.5 and 5, such as between 0.5 and 2.

### Reducing agent

Optionally, a reducing agent may be used in the present method. This has the effect of providing a reducing agent for the metaborate and/or catalysing the borohydride formation by forming metal hydrides in-situ. In an embodiment, two or more reducing agents may be present.

Examples of the reducing agent used include iron (Fe), copper (Cu), magnesium (Mg), zinc (Zn), tin (Sn), sodium (Na), aluminium (Al), carbon black (C) and nickel (Ni) or a combination of two or more thereof, preferably powders. In an embodiment, the present invention to use iron powder and copper powder since magnesium powder is more expensive to regenerate. In another embodiment, aluminium powder is used since high regeneration rates may be obtained. In an embodiment, either zinc alone or a combination of zinc and carbon is used as reducing agents.

Without wishing to be bound to a particular theory, the present inventors believe that the metal or carbon powder acts as a reducing agent in the present regeneration method and forms M_{y}Oₓ compounds or C_{y}Oₓ compounds, wherein M is a metal, C is carbon, y is an integer between 1 and 2, O is oxygen and x is an integer between 1 and 3. Examples of these compounds are MgO, CuO, Cu₂O, NiO, Al₂O₃, SnO₂, FeO, Fe₂O₃ and CO₂.

The oxidized metal powder (MOₓ) could be reduced to the corresponding metal using methods known in the art for the metal to be reused in the present application. It is preferred to keep the required amount of metal powder to a minimum, since reduction of the formed oxidized metal powder is energy consuming.

In an embodiment, no metal powder is used during the present invention.

In an embodiment, the reducing agent is used in a weight ratio of reducing agent to metal borate ( $\frac{weight of reducing agent}{weight of metal borate}$) of between 0.1 and 15, preferably between 1 and 10, more preferably between 0.5 and 5.

### Stabilization agent

In an embodiment, a stabilization agent is added. In an embodiment, two or more stabilization agents may be present.

In an embodiment, the stabilization agent is an anhydrous metal (M) hydroxide powder, preferably selected from the group consisting of magnesium hydroxide (Mg(OH)₂), copper hydroxide (Cu(OH)₂), iron(lll) hydroxide (Fe(OH)₃), calcium hydroxide (Ca(OH)₂), nickel hydroxide (Ni(OH)₂) and zinc hydroxide (Zn(OH)₂) and a combination of two or more thereof. This one or more stabilizing agents are used in the present method to stabilize any in-situ formed reactive components (i.e. sodium borohydride).

In an embodiment, the stabilization agent is used in a weight ratio of stabilization agent to metal borate ( $\frac{weight of stabilization agent}{weight of metal borate}$) between 0.1 and 5, preferably between 0.5 and 2, more preferably between 0.1 and 1, such as between 0.5 and 1.

### Combinations of optional agents

In an embodiment, a reducing agent and a drying agent is present.

In an embodiment, a reducing agent and a stabilization agent is present.

In an embodiment, a stabilization agent and a drying agent is present.

In an embodiment, a reducing agent, a drying agent and a stabilization agent is present.

In an embodiment, a drying and a stabilization agent are present both being of the same metal, preferably a combination of MgO and Mg(OH)₂, CuO and Cu(OH)₂, FeO(OH) and Fe(OH)₃, CaO and Ca(OH)₂, NiO and Ni(OH)₂, and ZnO and Zn(OH)₂, or a combination of two or more of these combination.

In an embodiment, the total amount of reducing agent, drying and stabilization agent is used in a weight ratio of reducing agent, drying and stabilization agent to metal borate (equation below) is between 0.1 and 20, preferably between 1 to 15, more preferably between 0.5 and 10, such as between 1 and 6. $\left(\frac{weight of reducing agent + weight of drying agent + weight of stabilization agent}{weight of metal borate}\right)$

### Mechanical processing

The present invention relates to a method of regeneration of a metal borate to the corresponding metal borohydride by mechanical processing of said metal borate in the presence of gaseous hydrogen. The gaseous hydrogen is added to the metal borate and is present during at least part, preferably all, of the mechanical processing.

In an embodiment of the present method, no metal hydride is added. In a specific embodiment of the present invention, at most 0.1 wt.% of metal hydride is present based on the weight of the metal borate. It is possible that during the process of regeneration a metal hydride is formed in situ, however in this embodiment a metal hydride is not added.

The method according to the present invention works using mechanical processing. The mechanical processing ensures that there is sufficient contact between the starting material, the hydrogen and optionally the drying agent, reducing agent and/or stabilization agent to achieve the regeneration reaction.

The method can be carried out batch wise or continuous.

When the method is carried out batch wise, the method may be carried out in a closed reactor or container.

Mechanical processing ensures that there is mechanical friction and/or impact. Preferably, the mechanical processing is such that there is sufficient force (e.g. compression force, tension force, shear force, torsion force) to achieve the reaction.

In an embodiment, the mechanical process includes grinding, milling, e.g. ball milling. A person skilled in the art can select the appropriate settings of for example the particle size of the starting materials, the minimum impact force needed which is based on the combination of rotational speed (RPM) and mass of the starting materials, friction, a certain amount of impacts (collisions) per time unit, the amount of free space, total ball volume to reactor volume. Part of these are dependent on the specific ball mill used.

The duration of the mechanical processing may be between 5 minutes and 72 hours.

In an embodiment, the temperature of the starting materials is room temperature (25 °C) at the start. During the processing heat is generated by the mechanical processing. In an embodiment, the temperature of the materials may reach a temperature of up to 200 °C, for example up to 100 °C or between 50 °C and 75 °C. However, lower temperatures such as between 25 and 35 °C might also work under specific conditions. A person skilled in the art will be able to determine the correct conditions for mechanical processing.

In an embodiment, the mechanical processing is continued until a temperature of at least 20 °C, preferably at least 40 °C, such as at least 80 °C, or even at least 90 °C is obtained for the material undergoing processing.

In an embodiment, ball mill is used to carry out the mechanical processing, more preferably using metallic balls. In the embodiment using ball milling, the duration is preferably between 5 minutes and 16 hours and/or the ball mill is set at a speed of between 500 and 2000 rpm, such as between 1000 and 1800 rpm.

### Metal borohydride obtained

The product obtained with the present method is a metal borohydride, such as MBH₄. Preferably, the metal obtained is sodium borohydride, viz. NaBH₄ or potassium borohydride, viz. KBH₄. The conversion rate from metal borate to metal borohydride may be any number but is preferably as high as possible. In an embodiment, the conversion from metal borate to the metal borohydride is at least 0.5%, such as at least 5%, more preferably at least 50%. The remainder is unreacted metal borate, starting powder and metal oxides.

### Effects of the invention

The present inventors have observed that it is possible to regenerate metal borohydride without the use of expensive metal hydrides but by using gaseous hydrogen instead. The present method is very suitable for use in the field of renewable energy. The metal borohydrides formed with this method can be stored in a safe, harmless way that is easy to store as well as to bunker. The metal borohydrides formed with this method are easily transported by truck to the site of use. The method is easily scalable and there is no loss of hydrogen.

Because the present method does not require the use of metal hydrides, which are expensive, even with a lower conversion rate this method is still economically viable. The present inventors can therefore afford to operate even at a lower conversion rate.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage. The scope of the present invention is defined by the appended claims. One or more of the objects of the invention are achieved by the appended claims.

### EXAMPLES

The present invention is further elucidated based on the Examples below which are illustrative only and not considered limiting to the present invention.

### Materials and equipment

The following materials were used.
As ultra-pure water (UPW) water with a conductivity value of 0.055 µS/cm was used, made by filtering demi-water obtained from Houweling group.
Sodium metaborate dihydrate (NaBO₂·2H₂O) a white solid powder obtained from Sigma Aldrich.
Sodium metaborate anhydrous (NaBO₂) a white solid powder obtained by drying it as discussed above.
As a hydrogen extraction catalyst for testing hydrogen extraction after regeneration 5 wt.% of Ruthenium on a IRA-400 ion exchange resin beads was used.

The following equipment was used. A ball mill of Retsch of the type High energy ball mill E-max was used. A manometer of IFM electronics and is of the type PU5414 was used.

For the mechanical processing ball milling was used in the Examples. A ball mill with two stainless steel containers as reactors for duplicate measurements, each container having a volume of 0.125L, were used combined with 68 grams of metallic balls (AlSI420 stainless steel) having a diameter that varies between 3 to 8 mm. The containers and all glassware used were cleaned with UPW and dried completely before use.

An amount of approximately 1 gram of NaBO₂ (exactly weighed) was added to each of the containers, optionally together with MgO as drying agent and/or Cu or Fe as a metal powder. In addition, the metallic balls were added after which the containers were each tightly closed with a lid.

Gaseous hydrogen was then added to each of the containers with a pressure of around 3.5 bar (350,000 Pa) after which each container was inserted into the ball mill and set to a speed of between 300 and 1800 rpm for a duration of 10 minutes to 16 hours. The temperature outside the containers was measured during the measurement using an internal thermocouple.

The ball mill was then stopped, the pressure inside each container was measured using a manometer after which the containers were opened in a secure environment (fume hood) to release any remaining gases/fumes.

First, the metallic balls were manually removed from the containers using tweezers. Upon visual observation it was noted that the content of the containers consisted of a fine powder that was weighed.

To evaluate if the tests were successful in regenerating the sodium metaborate into sodium borohydride, a sample of the powder product obtained was tested under increasing temperatures for hydrogen extraction according to the procedure specified below to review release of hydrogen, which is a confirmation of regeneration of the starting material.

### Procedure for hydrogen extraction testing

### Test without hydrogen extraction catalyst

To see if any regeneration has taken place a test without the presence of a hydrogen extraction catalyst can be carried out. For this test a mixture was prepared by addition of water to the solid powder obtained from the ball mill without the presence of any hydrogen extraction catalyst. In case bubble formation was observed, that was taken as an indication of the activity of the regenerated material in reaction to water and hence to the effectiveness of method according to the invention.

### Tests with hydrogen extraction catalyst

There are two separate tests that were used, namely the so-called bubble test and the volumetric displacement test. Each of which will be discussed in more detail below.

For both test, the first step was cleaning the hydrogen extraction catalyst used. Therefore, two small pieces (total weight of approx. 0.1 gram) of a hydrogen extraction catalyst that converts any formed sodium borohydride back to sodium borate were placed in a glass beaker of 10 ml. Then 5 ml of UPW was added. The beaker was placed on a heating plate and heated until it boils, ensuring that the catalyst was thereby completely cleaned of any residue from previous powder tests. Observations that may be done during this cleaning of the catalyst are as follows. Below 35°C dissolved gasses may be seen to being released originate from air, such as CO₂. Between 35°C and 75°C no bubbles are present at all. Above a temperature of 80°C bubble formation due to boiling of water might be visible.

The UPW is decanted of and the hydrogen extraction catalyst remains in the beaker and is ready for use in the tests discussed below.

### Bubble test

The bubble test was carried out to see if the regeneration was successful. For this bubble test, an amount of 1.0 gram of the solid material obtained from the regeneration examples was placed into a clean plastic cup of 40 ml to which a basic solution (5 mL of UPW + 1 wt.% of NaOH) was added. Most of the samples were visually observed to have a deep black colour. Any sodium borohydride formed was found to be dissolved in the basic solution.

Alternatively, a solvent, namely isopropyl alcohol (IPA) was used. It was added to the solid material obtained from the regeneration examples instead of water or a basic solution. This solvent was used because it is considered to be suitable in case of the use of aluminium and/or zinc which are both readily dissolvable in basic solutions which is undesirable. IPA was found to be suitable because it will dissolve sodium borohydride but will not dissolve aluminium or zinc.

Then, the mixture obtained was transferred into the top end of a 50 ml syringe containing a piece of wetted (UPW) cotton to act as a filter. As the mixture exits the syringe by pushing the plunger, the solution was found to be clear which is desirable to allow for later observation of the hydrogen bubbles. The clear solution was poured into the glass beaker with the hydrogen extraction catalyst, prepared as discussed above. The residue remaining inside the syringe was assumed to comprise of solid metal oxides and unreacted metal powder.

Next, the beaker containing the clear solution and the hydrogen extraction catalyst was placed on a heating plate and heated slowly to a temperature around 75°C over a time period of approx. 10 minutes.

The formation of hydrogen gas bubbles is then visually observed and noted. The number of bubbles, the temperature at which bubble formation starts and ends as well as the duration of the bubble formation were tracked.

A test is considered to be successful if bubbles begin to appear on the surface of the catalyst at a temperature of around 40°C and continue to form until 75°C is reached for at least 10 minutes, indicating that H₂ is being released from the solution, indicating the presence of sodium borohydride. It is desirable to have the following observation when sodium borohydride was formed during the regeneration reaction: bubble formation mainly observed in the temperature range of 60-75°C and for a duration of at least 1 minute. The longer the duration of hydrogen gas formation - which takes place on the catalyst surface - in the temperature range of between 60-75°C, the more successful the test is considered to be.

All starting materials and mixtures thereof have been tested the same way to confirm there are no bubbles forming without ball milling. This is considered a blank experiment.

### Volume displacement test

When a minimum duration of bubble formation of 10 minutes was observed, the present inventors found that a volume displacement test as discussed below can be performed and was performed.

Based on the amount of sample (solid material obtained from ball mill after regeneration) taken and the initial mass of the sodium metaborate starting material, the theoretical maximum volume of hydrogen can be calculated based on a 100 % conversion.

The volume of actual hydrogen gas produced was precisely measured by means of a graduated cylinder (volumetric cylinder) placed upside down into a beaker that is filled with water. After this any remaining air inside the graduated cylinder is removed by a flexible tube attached to a manual syringe; this will lead to the complete filling of the graduated cylinder with water from the beaker. It should be noted that the water level in the beaker does not and was not the same as the water level in the graduated cylinder, the latter being higher. The flexible tube remained present inside the graduated cylinder. The manual syringe was removed from the other end of the flexible and that end was connected to an airtight glass vial containing the sample dissolved in basic water, prepared as discussed above including the filtration step; said vial further containing two pieces of hydrogen extraction catalyst that have been previously cleaned as discussed above for the bubble test. When the sample inside the airtight glass vial was heated, hydrogen gas was released which displaces part of the water that was present inside the graduated cylinder. The total volume of hydrogen gas formed can be visually observed as the difference in water volume prior to and after the hydrogen extraction reaction. Based on the displaced volume the actual conversion rate was calculated using the 100 % conversion as calculated above.

### Results

Table 1 below shows the different experiments that were carried out.

These tests clearly show that regeneration of metal borate was successful.

The present inventors observed that generally a lower number of crystal water molecules, in other words, a more dry starting material, provided better results.

In addition, the present inventors observed that using the specific ball milling set up, the RPM should not be increased indefinitely since that would lead to more friction but to reduced impact of the metallic balls on the material thereby reducing the effectiveness of the regeneration.

**Table 1a**

| **Ex** . **#** | **Metal borate** | **Metal** | **Wt. ratio metal to metal borate** | **metal oxide** | **Wt. ratio metal oxide to metal borate** | **H2 (bar)** |
|---|---|---|---|---|---|---|
| 1 | NaBO₂ anhydr. [1.11] | Cu [3.63] | 3.27 | - | - | 3.6 |
| 2 | NaBO₂ anhydr. [0.98] | Cu [3.36] | 3.42 | - | - | 3.6 |
| 3 | NaBO₂ anhydr. [0.98] | Cu [3.58] | 3.65 | - | - | 3.7 |
| 4 | NaBO₂ anhydr. [0.97] | Cu [3.52] | 3.63 | MgO [4.4] | 4.54 | 3.7 |
| 5 | NaBO₂·1/3H₂O [2.14] | Cu [2.44] | 1.14 | MgO [4.64] | 2.17 | 3.3 |
| 6 | NaBO₂·3/2H₂O [0.65] | Cu [1.67] | 2.56 | MgO [1.63] | 2.5 | 3.7 |
| 7 | NaBO₂ anhydr. [0.57] | Cu [0.93] | 2.34 | MgO [0.88] | 1.17 | 3.7 |
| | | Fe [0.86] | | | | |
| 8 | NaBO₂ anhydr. [2.0]* | Al [1.02] | 0.5 | - | - | 3.6 |

| | | | | | | |
|---|---|---|---|---|---|---|
| * IPA was used instead of a basic solution | | | | | | |

**Table 1b**

| **Ex . #** | **Ball mill speed (rpm)** | **Ball milling duration (hours)** | **Temper ature max. in ball mill** (°C) | **Bubbling observed when preparing mixture^{#}** | **H2 evolution observed?** |
|---|---|---|---|---|---|
| 1 | 950 | 4.5 | 44 | 0 | Maximum 20 bubbles until 70°C. |
| 2 | 1400 | 3.5 | 60 | + | Continuous stream of bubbles |
| 3 | 1400/ 1800 | 1/1 | 97 | + | Continuous stream of bubbles observed at 40-70°C. |
| 4 | 1400/ 1800 | 1/1 | 97 | 0 | Continuous stream of bubbles observed at 40-70°C |
| 5 | 1500 | 2 | 61 | 0 | From 40 - 75 °C bubbles observed and continue for 12 minutes |
| 6 | 1400 | 3 | 60 | 0 | Around 5 bubbles observed |
| 7 | 1400 | 2.5 | 60 | 0 | Around 10 bubbles observed at 40-70 °C |
| 8 | 1600 | 1.5 | 78 | ++ | Continuous stream of bubbles observed at 40-70°C. Conversion |

When comparing experiments 1 to 3 it can be seen that higher RPM's for the specific ball mill set up, generated more bubbly powder and more bubbles during the bubble test, indicating that a higher conversion rate was achieved.

When comparing experiment 4, 5 and 6 which all use a combination of Cu as reducing agent and MgO as drying agent and have similar ball milling settings, the effect of the difference between different starting materials (level of crystal water) can be seen. It was found that more conversion was obtained when using anhydrous sodium metaborate (having zero molecules of crystal water), followed by 1/3 molecules crystal water and then 1.5 molecules of crystal water (NaBO₂·3/2H₂O). This clearly shows that the amount of water has an influence on the conversion rate.

Experiment 7 compared to 4 show the effect of having Cu and Fe as dual reducing agents compared to Cu alone. From these experiments it can be observed that both Cu as well as the combination of Cu and Fe as reducing agents were successful, the former being more successful than the latter.

Experiments 2 and 3 compared to experiment 4 showed in the test without hydrogen extraction catalyst that bubbling was only observed with copper powder without the presence of MgO.

When comparing experiments 3 and 8, aluminum as a reducing agent was found to provide a higher conversion than copper as reducing agent under these specific circumstance. For experiment 8 a volume displacement test was carried out, and a conversion of approximately 5% was calculated.

Concluding , the present inventors have shown that regeneration of metal borate is possible using gaseous hydrogen and mechanical processing to prepare a metal borohydride and hence one or more of the objects have been achieved. The present invention is further elucidated in the appended claims.

## Claims

1. A method of regenerating a metal borate to the corresponding metal borohydride by mechanical processing of said metal borate with the addition of gaseous hydrogen.

2. **The** method according to claim 1, wherein the metal borate has the formula MBO₂·xH₂O wherein M denotes the metal ion, preferably Na, and wherein x denotes the number of crystal water molecules.

3. **The** method according to claim 2, wherein x is at most 2, preferably wherein x is < 2, more preferably wherein x is at most 3/2, or wherein x is at most 4/3, or at most 1.

4. **The** method according to any one of the preceding claims, wherein the metal borate is sodium metaborate (NaBO₂) or sodium metaborate hydrate (NaBO₂·xH₂O) wherein x < 2, or a combination of two or more thereof or wherein the metal borate is potassium metaborate (KBO₂) or potassium metaborate hydrate (KBO₂·xH₂O) wherein x < 2, or a combination of two or more thereof.

5. The method according to any one of the preceding claims, wherein a reducing agent is added.

6. The method according to claim 5, wherein the reducing agent is selected from the group consisting of iron (Fe), copper (Cu), magnesium (Mg), zinc (Zn), tin (Sn), sodium (Na), aluminium (Al), carbon black (C) and nickel (Ni) and a combination of two or more thereof, preferably in the form of a powder.

7. The method according to any one of the preceding claims, wherein a drying agent is added.

8. The method according to claim 7, wherein the drying agent is selected from the group consisting magnesium oxide (MgO), copper oxide (CuO), iron(lll) oxide-hydroxide (FeO(OH)), iron(lll) oxide (Fe₂O₃), calcium oxide (CaO), silicon oxide (SiO₂), nickel oxide (NiO) and zinc oxide (ZnO) and a combination of two or more thereof.

9. The method according any one of the preceding claims, wherein a stabilization agent is added.

10. The method according to claim 9, wherein the stabilization agent is an anhydrous metal (M) hydroxide powder, preferably selected from the group consisting of magnesium hydroxide (Mg(OH)₂), copper hydroxide (Cu(OH)₂), iron(III) hydroxide (Fe(OH)₃), calcium hydroxide (Ca(OH)₂), nickel hydroxide (Ni(OH)₂) and zinc hydroxide (Zn(OH)₂) and a combination of two or more thereof.

11. The method according to claim 10, wherein a drying and a stabilization agent are present both being of the same metal, preferably a combination of MgO and Mg(OH)₂, CuO and Cu(OH)₂, FeO(OH) and Fe(OH)₃, CaO and Ca(OH)₂, NiO and Ni(OH)₂, and ZnO and Zn(OH)₂, or a combination of two or more of these combination.

12. The method according to any one of the preceding claims, wherein said metal borate and said corresponding metal borohydride are both solids, preferably both powders.

13. The method according to any one of the preceding claims, wherein hydrogen is gaseous hydrogen, preferably at a pressure of at least 1 bar.

14. The method according to any one of the preceding claims, the method comprising the steps of:
* transferring a solid metal borate or hydrate thereof into a reactor,
* adding gaseous hydrogen to said reactor,
* optionally adding a reducing agent and/or a drying agent and/or a stabilization agent to said reactor,
* mechanically processing the solid material in said reactor in the presence of said gaseous hydrogen to regenerate said metal borate or hydrate into a metal borohydride.

15. A metal borohydride obtained, preferably directly obtained, by the method according to any one of the preceding claims.
